# EUROPEAN PATENT SPECIFICATION

(11) **EP 2 434 684 B1**
(45) Date of publication and mention of the grant of the patent: **18.01.2017**
(21) Application number: 10791549.8
(22) Date of filing: 23.06.2010
(51) Int. Cl.: H04L 12/14, H04M 15/00

(54) **VALUE-ADDED SERVICE PROVIDING SYSTEM AND METHOD**
SYSTEM UND VERFAHREN ZUR BEREITSTELLUNG EINES MEHRWERTDIENSTES
SYSTÈME ET PROCÉDÉ DE FOURNITURE DE SERVICE À VALEUR AJOUTÉE

(30) Priority: 26.06.2009 CN 200910142262
(43) Date of publication of application: 28.03.2012
(73) Proprietor: ZTE Corporation, Shenzhen, Guangdong 518057 (CN)
(72) Inventor: LIU, Xinqiang, Shenzhen Guangdong 518057 (CN); SHI, Meikang, Shenzhen Guangdong 518057 (CN); CHEN, Fuzhong, Shenzhen Guangdong 518057 (CN)
(74) Representative: Awapatent AB
(86) International application number: PCT/CN2010/074315
(87) International publication number: WO 2010/149043

(56) References cited:
- EP-A1- 1 441 314
- WO-A2-2004/051978
- CN-A- 1 635 726
- CN-A- 1 992 763
- CN-A- 1 996 858
- CN-A- 101 616 392
- CN-A- 101 616 392
- US-A1- 2003 101 135
- "Universal Mobile Telecommunications System (UMTS); LTE; Open Service Access (OSA) Application Programming Interface (API); Part 12: Charging Service Capability Feature (SCF) (3GPP TS 29.198-12 version 8.0.0 Release 8); ETSI TS 129 198-12", ETSI STANDARD, EUROPEAN TELECOMMUNICATIONS STANDARDS INSTITUTE (ETSI), SOPHIA ANTIPOLIS CEDEX, FRANCE, vol. 3-CN5, no. V8.0.0, 1 January 2009 (2009-01-01), XP014043312,

## Description

### Technical Field

The present invention relates to the telecom value-added service, and in particular, to a system and a method for providing a value-added service.

### Background of the Related Art

As the extension of the telecom value-added service becomes more and more popularized, the billing strategy which charges according to traffic has appeared more and more frequently in the value-added service. In the related art, The main characteristic of the value-added service which charges prepaid users according to traffic is that, a value-added service engine applies to a value-added service authentication charging center for some traffic quota to be assigned to a user to use when the user starts to request to use a value-added service, and simultaneously freezes corresponding fee of the user according to the billing of the assigned traffic quota; during the user uses the value-added service, if the value-added engine finds that the traffic quota assigned to a user has been used up, the value-added service engine again applies to the value-added service authentication charging center for traffic quota for the user, and again freezes corresponding fee of the user; repetition goes on until the user finishes using the value-added service or the user quits actively; then, the value-added service engine sends the traffic practically used by the user during current usage of the value-added service to the value-added service authentication charging center to perform the operations of checking and billing and actually deduct the fee of the user.

The existing technology has mainly two disadvantages: first, if the value-added service needs a big traffic when a prepaid user uses the value-added service which charges according to traffic, it may be likely to cause the value-added service engine to apply to the value-added service authentication charging center for traffic quotas for several times, and cause the value-added service authentication charging center to re-bill each time for assigning the traffic quota and interact with a prepaid device to freeze the corresponding part of fees of the prepaid user, thus resulting in a low efficiency of system resource consumption and processing; second, if the account balance of the user is only enough to afford to be frozen for several times of billing for the traffic quotas, but not enough to pay for the fee needed by the whole value-added service, the value-added service authentication charging center will return a failure message to the value-added service engine when the account balance of the user is not enough, thus causing the value-added service engine to end up providing the value-added service for the user without any interaction to prompt the user in the system when the account balance of the user is not enough to use the whole value-added service.

US 2003101135A discloses producing a reservation and call duration such that the reservation amount is within the available credit in the user's account. D1 also discloses that Decision block 312 is the top of a loop that can iteratively adjust a reservation amount until either a successful reservation can be made, or failure is detected.

EP1441314A discloses A network-based e-commerce system 100, 200 contains one or more service control points (SCPs) 122, 206 for establishing and maintaining credit reservation accounts associated with a plurality of prepaid subscribers. The credit reservation accounts are dedicated for payment, if at all, to particular service (content) providers.

### Summary of the Invention

The technical problem to be solved by the invention is to provide a system and a method as defined in the presently independent claims for providing a value-added service, to improve the processing efficiency when a prepaid user uses the value-added service which is charged according to the traffic in the communication field.

To solve the above problem, the invention provides a system for providing value-added service, comprising: a value-added service authentication charging center, a value-added service engine and a prepaid device;
the value-added service engine is configured to, after receiving a service request sent by a user terminal, send to the value-added service authentication charging center a traffic start request message, which carries a user identifier and a value-added service identifier, and provides a value-added service for the user after receiving a traffic start response message;
the value-added service authentication charging center is configured to, after receiving the traffic start request message, perform a billing and calculate used money amount according to traffic information of the value-added service, and send to the prepaid device a freezing request, which carries a money amount to be frozen and the user identifier; and calculate a traffic quota available to the user according to a balance of the user after receiving a freezing failure message, and return to the value-added service engine the traffic start response message, which carries the user identifier and the traffic quota available to the user;
the prepaid device is configured to, after receiving the freezing request, judge whether the balance of the user is enough to freeze a corresponding money amount, if not, return to the value-added service authentication charging center the freezing failure message, which carries the user identifier and the balance of the user.

The value-added service engine is further configured to: when detecting any one of following conditions, send to the value-added service authentication charging center a traffic stop request message, which carries the user identifier and information of traffic practically used by the user:
(a) the user ends up using; (b) the user actively stops using; (c) the traffic quota has been used up.

The value-added service authentication charging center is further configured to, after receiving the traffic stop request message, bill for the traffic practically used by the user and calculate a fee practically used, and send to the prepaid device a message for requesting to deduct the fee, which carries the user identifier and the fee practically used by the user;
the prepaid device is further configured to, after receiving the message for requesting to deduct the fee, deduct a corresponding fee of the user and return a deducting success message to the value-added service authentication charging center.

The value-added service authentication charging center is further configured to, after receiving the freezing failure message, prompt the user that the balance is not enough and whether to continue to use the value-added service, and after the user confirms to continue to use, calculate the traffic quota available to the user according to the balance of the user, and return to the value-added service engine the traffic start response message.

The value-added service authentication charging center is further configured to store traffic information of the value-added service when a value-added service provider launches a value-added service application; or
the value-added service authentication charging center comprises an information synchronizing module, which is configured to, when the value-added service provider launches the value-added service application, synchronizing traffic information needed by the value-added service to the value-added service engine; the value-added service engine is further configured to carry the traffic information of the value-added service when sending the traffic start request message to the value-added service authentication charging center.

The value-added service authentication charging center is further configured to, after the user confirms to continue to use the value-added service, send to the prepaid device a request for freezing the balance of the user, which carries the user identifier and the balance;
the prepaid device is further configured to, after receiving the request for freezing the balance of the user, freeze the balance of the user.

The invention also provides a method for providing value-added service, comprising:
after receiving a service request sent by a user terminal, a value-added service engine sending to a value-added service authentication charging center a traffic start request message, which carries a user identifier and a value-added service identifier, the value-added service authentication charging center, after receiving the traffic start request message, performing a billing and calculating a used money amount according to traffic information of the value-added service, and sending to a prepaid device a freezing request, which carries a money amount to be frozen and the user identifier; the prepaid device, after receiving the freezing request, judging whether a balance of the user is enough to freeze a corresponding money amount, if not, returning to the value-added service authentication charging center a freezing failure message, which carries the user identifier and the balance of the user; and
after receiving the freezing failure message, the value-added service authentication charging center inversely calculating a traffic quota available to the user according to the balance of the user and returning to the value-added service engine a traffic start response message, which carries the user identifier and the traffic quota available to the user; the value-added service engine providing a value-added service for the user after receiving the traffic start response message.

The method further comprises: when detecting any one of following conditions, the value-added service engine sending to the value-added service authentication charging center a traffic stop request message, which carries the user identifier and information of traffic practically used by the user:
(a) the user ends up using; (b) the user actively stops using; (c) the traffic quota has been used up.

The method further comprises: the value-added service authentication charging center, after receiving the traffic stop request message, billing for the traffic practically used by the user and calculating a fee practically used, and sending to the prepaid device a message for requesting to deduct the fee, which carries the user identifier and the fee practically used by the user; and
the prepaid device, after receiving the message for requesting to deduct the fee, deducting a corresponding fee of the user and returning a deducting success message to the value-added service authentication charging center.

The method further comprises: the value-added service authentication charging center, after receiving the freezing failure message, prompting the user that the balance is not enough and whether to continuously use the value-added service, and after the user confirms to continue to use, then calculating the traffic quota available to the user according to the balance of the user, and returning to the value-added service engine the traffic start response message.

The method further comprises: when a value-added service provider launches a value-added service application carrying traffic information of the value-added service, the value-added service authentication charging center storing the traffic information of the value-added service, or an information synchronizing module, which is located in the value-added service authentication charging center, synchronizing the traffic information of the value-added service to the value-added service engine; and
when the information synchronizing module synchronizes the traffic information of the value-added service to the value-added service engine, the value-added service engine carrying the traffic information of the value-added service when sending the traffic start request message to the value-added service authentication charging center.

The method further comprises: the value-added service authentication charging center, after the user confirms to continue to use the value-added service, sending to the prepaid device a request for freezing the balance of the user, which carries the user identifier and the balance; and
the prepaid device, after receiving the request for freezing the balance of the user, freezing the balance of the user.

In conclusion, the invention provides a system and a method for providing a value-added service, wherein, when a prepaid user starts to request to use the value-added service which charges according to traffic, the value-added service authentication charging center returns the traffic quota needed by the value-added service at one time, and interacts with the prepaid device to freeze the fee of the user for the billing of the traffic quota, thus ensuring that the value-added service engine does not need to apply to the value-added service authentication charging center for the traffic quota during the process of the user using the value-added service, thereby reducing the interactions both between the value-added service engine and the value-added service authentication charging center, and between the value-added service authentication charging center and the prepaid device, reducing the occupancy of system resources and realizing the destination of improving the processing efficiency; in addition, when a prepaid user starts to request to use the value-added service which charges according to traffic, the value-added service authentication charging center bills for the fee according to the traffic quota needed by the value-added service, and freezes the fee of the user in the prepaid device, and if it is found at this moment that the balance of the user is not enough to use the whole value-added service, the value-added service authentication charging center will request the user by way of small message and so on to confirm whether to continue to use the value-added service, which improves the friendly interaction between the system and the user..

### Brief Description of Drawings

FIG. 1 is a block diagram of the system according to the method of the invention;
FIG. 2 is a flowchart of the method of the invention.

### Preferred Embodiments of the Present Invention

The invention provides a system and a method for providing a value-added service, comprising: after receiving a service request sent by a user terminal, a value-added service engine sending to a value-added service authentication charging center a traffic start request message, which carries a user identifier and a value-added service identifier, the value-added service authentication charging center, after receiving the traffic start request message, performing a billing and calculating a used money amount according to traffic information of the value-added service, and sending to a prepaid device a freezing request, which carries a money amount to be frozen and the user identifier; the prepaid device, after receiving the freezing request, judging whether a balance of the user is enough to freeze a corresponding money amount, if not, returning to the value-added service authentication charging center a freezing failure message, which carries the user identifier and the balance of the user; after receiving the freezing failure message, the value-added service authentication charging center inversely calculating a traffic quota available to the user according to the balance of the user and returning to the value-added service engine a traffic start response message, which carries the user identifier and the traffic quota available to the user; the value-added service engine providing a value-added service for the user after receiving the traffic start response message.

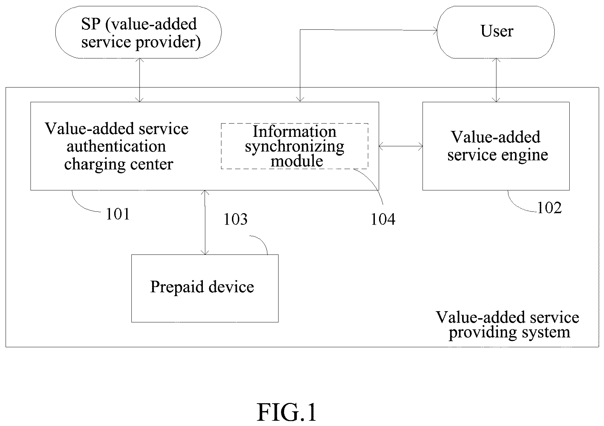

The embodiment provides a system for providing a value-added service, as shown in FIG.1, comprising: a value-added service authentication charging center 101, a value-added service engine 102 and a prepaid device 103; wherein,
the value-added service authentication charging center is configured to locally store traffic information of a value-added service when receiving an application to launch the value-added service from a value-added service provider (SP);
the value-added service authentication charging center may comprise an information synchronizing module, which is configured to, when the SP launches the value-added service application, synchronize traffic information needed by the value-added service to the value-added service engine.

The value-added service authentication charging center is further configured to, after receiving a traffic start request message (TrafficStartReq), perform a billing and calculate a used money amount according to the traffic information, and send to the prepaid device a freezing request, which carries a money amount to be frozen and the user identifier;

If the TrafficStartReq carries the traffic information of the value-added service, the value-added service authentication charging center obtains the traffic information of the value-added service from the TrafficStartReq; if the TrafficStartReq does not carry the traffic information of the value-added service, the value-added service authentication charging center obtains the traffic information of the value-added service from its own value-added service base.

The value-added service authentication charging center is also configured to, after receiving a freezing success message, return to the value-added service engine a traffic start response message (TrafficStartRsp), which carries the user identifier and the traffic quota of the value-added service (i.e. the traffic information of the value-added service), and prompt the user that the balance is not enough and whether to continue to use the value-added service after receiving a freezing failure message; and after receiving the message for continuing to use returned by the user, inversely calculate the traffic quota available to the user according to the balance of the user, and return to the value-added service engine TrafficStartRsp carrying the user identifier and the traffic quota available to the user; the value-added service authentication charging center may also send to the prepaid device a request for freezing the balance of the user, which carries the user identifier and the balance, after receiving the message for continuing to use feedback by the user.

The value-added service authentication charging center is also configured to, after receiving a traffic stop request message (TrafficStopReq), bill for the traffic practically used by the user and calculate a fee practically used, and send to the prepaid device a message for requesting to deduct the fee, which carries the user identifier and the fee practically used by the user; and further configured to return to the value-added service engine TrafficStopRsp after receiving a deducting success message.

The method for the value-added service authentication charging center to request the user to confirm whether to continue too use may be a short message and other methods, which are not limited by the invention.

The prepaid device is configured to, after receiving the freezing request, judge whether the balance of the user is enough to freeze a corresponding money amount, if yes, return to the value-added service authentication charging center a freezing success message carrying the user identifier, if not, return to the value-added service authentication charging center the freezing failure message which carries the user identifier and the available balance of the user; the prepaid device may directly freeze the balance of the user when returning the freezing failure message to the value-added service authentication charging center, and release automatically the freezing of the balance of the user if it does not receive the message for requesting to deduct the fee of the user from the value-added service authentication charging center within a certain period of time, and the prepaid device may also freeze the balance of the user only after receiving the request for freezing the balance of the user.

The prepaid device is also configured to, after receiving the message for requesting to deduct the fee, deduct the corresponding fee and return to the value-added service authentication charging center the deducting success message.

The value-added service engine is configured to, after receiving a service request sent by a user terminal, send to the value-added service authentication charging center the TrafficStartReq, which carries a user identifier and a value-added service identifier, to request for the one-off traffic quota of the value-added service, wherein, the TrafficStartReq needs to carry the traffic information of the value-added service when the traffic information of the value-added service is synchronized to the value-added service engine by way of synchronization;
the value-added service engine is further configured to, start to provide the value-added service for the user after receiving the TrafficStartReq, and send to the value-added service authentication charging center the TrafficStartReq carrying the user identifier and information of traffic practically used by the user to request for the billing and fee calculating of the traffic practically used by the user when one of the following conditions is detected: (a) the user ends up using; (b) the user actively stops using; (c) the traffic quota has been used up.

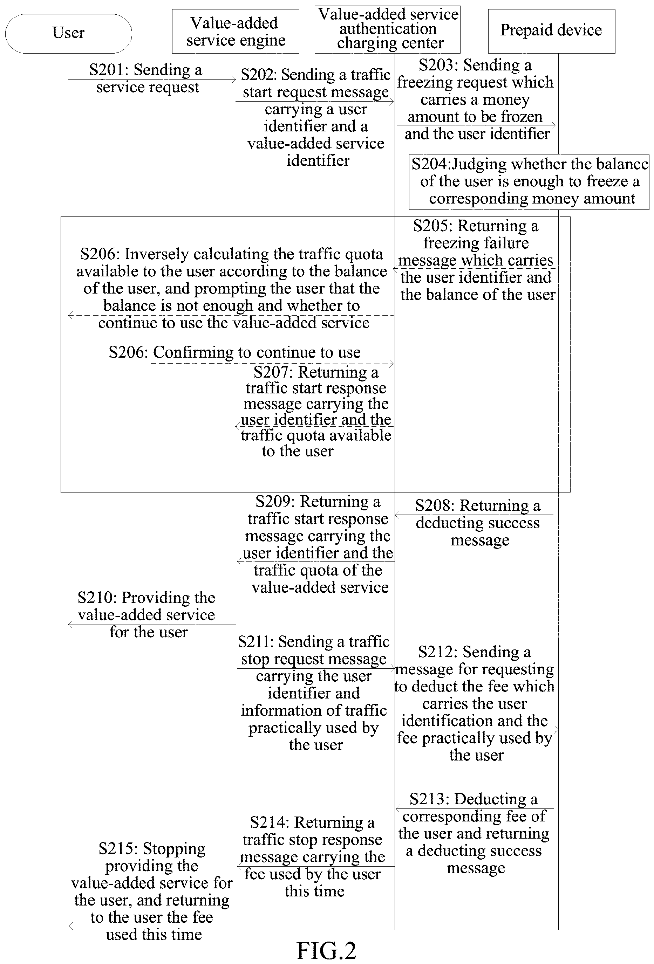

The invention provides a method for providing a value-added service, as shown in FIG.2, comprising:
the following steps S201-S207 are the process of a prepaid user practically using the value-added service which charges according to traffic:
   step S201, the user sending a service request to the value-added service providing system to apply for a certain value-added service;
   step S202, after the value-added service providing system receives the service request, the value-added service engine sending to the value-added service authentication charging center a TrafficStartReq, which carries a user identifier and a value-added service identifier;
   furthermore, when the value-added service authentication charging center synchronizes the traffic information of the value-added service to the value-added service engine, the value-added service engine also needs to carry the traffic information of the value-added service when sending the TrafficStartReq.
   step S203, after receiving the TrafficStartReq, the value-added service authentication charging center performing a billing and calculating a used money amount according to the traffic information of the value-added service, and sending to the prepaid device a freezing request, which carries a money amount to be frozen and the user identifier;
   when the TrafficStartReq does not contain the traffic information of the value-added service, the value-added service authentication charging center locally reads the traffic information of the value-added service.
   step S204, after receiving the freezing request, the prepaid device judging whether the balance of the user is enough to freeze a corresponding money amount, if not, proceeding to step S205; or else, proceeding to step S208;
   step S205, the prepaid device returning to the value-added service authentication charging center a freezing failure message, which carries the user identifier and the balance of the user;
   step S206, after receiving the freezing failure message, the value-added service authentication charging center inversely calculating the traffic quota available to the user according to the balance of the user, and prompting the user that the balance is not enough and whether to continue to use the value-added service, and proceeding to step S207 if the user confirms to continue to use, or else, the flow ending;
   step S207, the value-added service authentication charging center returning to the value-added service engine a TrafficStartRsq carrying the user identifier and the traffic quota available to the user; then proceeding to step S210;
   step S208, the prepaid device returning a freezing success message to the value-added service authentication charging center;
   step S209, the value-added service authentication charging center returning to the value-added service engine a TrafficStartRsq carrying the user identifier and the traffic quota of the value-added service (i.e. the traffic information of the value-added service); then proceeding to step S210;
   step S210, the value-added service engine providing the value-added service for the user after receiving the TrafficStartRsq;
   when the value-added service engine detects any one of the following conditions, proceeding to step S211;
   (a) the user ends up using; (b) the user actively stops using; (c) the traffic quota has been used up.
   step S211, the value-added service engine sending to the value-added service authentication charging center a TrafficStopReq carrying the user identifier and information of the traffic practically used by the user;
   step S212, after receiving the TrafficStartRsq, the value-added service authentication charging center billing for the traffic practically used by the user and calculating a fee practically used, and sending to the prepaid device a message for requesting to deduct the fee which carries the user identifier and the fee practically used by the user;
   step S213, after receiving the message for requesting to deduct the fee, the prepaid device deducting a corresponding fee of the user and returning a deducting success message to the value-added service authentication charging center;
   step S214, the value-added service authentication charging center returning to the value-added service engine a TrafficStopRsp carrying the fee used by the user this time;
   step S215, the value-added service engine stopping providing the value-added service for the user, and returning to the user the fee used this time; the flow ending.

In the step S205, the prepaid device may directly freeze the balance of the user when returning the freezing failure message to the value-added service authentication charging center, and release automatically the freezing of the balance of the user if not receiving the message for requesting to deduct the fee of the user from the value-added service authentication charging center; or, after the step S206, the value-added service authentication charging center sends a request for freezing the balance of the user to the prepaid device, wherein, the message carries the user identifier and the balance, and the prepaid device receiving the request for freezing the balance of the user freezes the balance of the user.

The following steps S301-S302 are the process of the SP applying to the operators for the launching of the value-added service charging according to traffic:
step S301, SP sending to the system a value-added service launching application carrying the type of the value-added service and the traffic information of the value-added service;
step S302, the value-added service authentication charging center storing the traffic information of the value-added service, or the information synchronizing module located in the value-added service authentication charging center synchronizing the traffic information of the value-added service to the value-added service engine, which stores the traffic information of the value-added service.

According to the scheme of the invention, the value-added service authentication charging center in the system can either adopt the way of storing the traffic information of the value-added service in the value-added service authentication charging center, or the way of synchronizing the traffic information of the value-added service to the value-added service engine, thereby meeting the requirements of different operators. In addition, the system in the invention can also support processing of the conventional Traffic Switch (a traffic switch message), i.e. it is compatible with earlier systems.

Those skilled in the art should understand that, all or part of the steps in the above method may be implemented by instructing related hardware through a program, which may be stored in a computer readable medium, such as read only memory, disk or optical disk and so on. Optionally, all or part of the steps in the above embodiment may be implemented by one or more integrated circuits. Accordingly, the modules/units in the above embodiments may be implemented in the form of hardware or may be implemented in the form of software functional modules. The invention is not limited to any specified combination of hardware and software.

### Industrial Applicability

The invention provides a system and a method for providing a value-added service, wherein, when a prepaid user starts to request to use the value-added service which charges according to traffic, the value-added service authentication charging center returns the traffic quota needed by the value-added service at one time, and interacts with the prepaid device to freeze the fee of the user for the billing of the traffic quota, thus ensuring that the value-added service engine does not need to apply to the value-added service authentication charging center for the traffic quota during the process of the user using the value-added service, thereby reducing the interactions both between the value-added service engine and the value-added service authentication charging center, and between the value-added service authentication charging center and the prepaid device, reducing the occupancy of system resources and realizing the destination of improving the processing efficiency; in addition, when a prepaid user starts to request to use the value-added service which charges according to traffic, the value-added service authentication charging center bills for the fee according to the traffic quota needed by the value-added service, and freezes the fee of the user in the prepaid device, and if it is found at this moment that the balance of the user is not enough to use the whole value-added service, the value-added service authentication charging center will request the user by way of small message and so on to confirm whether to continue to use the value-added service, which improves the friendly interaction between the system and the user.

## Claims

1. A system for providing value-added service, comprising: a value-added service authentication charging center (101), a value-added service engine (102) and a prepaid device (103);
the value-added service engine is configured to, after receiving a service request sent by a user terminal, send to the value-added service authentication charging center a traffic start request message, which carries a user identifier and a value-added service identifier, and provides a value-added service for the user after receiving a traffic start response message;
the value-added service authentication charging center is configured to, after receiving the traffic start request message, perform a billing and calculate used money amount according to traffic information of the value-added service, and send to the prepaid device a freezing request, which carries a money amount to be frozen and the user identifier; and calculate a traffic quota available to the user according to a balance of the user after receiving a freezing failure message, and return to the value-added service engine the traffic start response message, which carries the user identifier and the traffic quota available to the user;
the prepaid device is configured to, after receiving the freezing request, judge whether the balance of the user is enough to freeze a corresponding money amount, if not, return to the value-added service authentication charging center the freezing failure message, which carries the user identifier and the balance of the user;
wherein, the value-added service authentication charging center is further configured to, after receiving the freezing failure message, prompt the user that the balance is not enough and whether to continue to use the value-added service, and after the user confirms to continue to use, calculate the traffic quota available to the user according to the balance of the user, and return to the value-added service engine the traffic start response message.

2. The system according to claim 1, wherein,
the value-added service engine is further configured to: when detecting any one of following conditions, send to the value-added service authentication charging center a traffic stop request message, which carries the user identifier and information of traffic practically used by the user:
(a) the user ends up using; (b) the user actively stops using; (c) the traffic quota has been used up.

3. The system according to claim 2, wherein,
the value-added service authentication charging center is further configured to, after receiving the traffic stop request message, bill for the traffic practically used by the user and calculate a fee practically used, and send to the prepaid device a message for requesting to deduct the fee, which carries the user identifier and the fee practically used by the user;
the prepaid device is further configured to, after receiving the message for requesting to deduct the fee, deduct a corresponding fee of the user and return a deducting success message to the value-added service authentication charging center.

4. The system according to claim 1, wherein,
the value-added service authentication charging center is further configured to store traffic information of the value-added service when a value-added service provider launches a value-added service application; or
the value-added service authentication charging center comprises an information synchronizing module, which is configured to, when the value-added service provider launches the value-added service application, synchronizing traffic information needed by the value-added service to the value-added service engine; the value-added service engine is further configured to carry the traffic information of the value-added service when sending the traffic start request message which carries the traffic information of the value-added service to the value-added service authentication charging center.

5. The system according to claim 1, wherein,
the value-added service authentication charging center is further configured to, after the user confirms to continue to use the value-added service, send to the prepaid device a request for freezing the balance of the user, which carries the user identifier and the balance;
the prepaid device is further configured to, after receiving the request for freezing the balance of the user, freeze the balance of the user.

6. A method for providing value-added service, comprising:
after receiving a service request sent by a user terminal, a value-added service engine sending to a value-added service authentication charging center a traffic start request message, which carries a user identifier and a value-added service identifier, the value-added service authentication charging center, after receiving the traffic start request message, performing a billing and calculating a used money amount according to traffic information of the value-added service, and sending to a prepaid device a freezing request, which carries a money amount to be frozen and the user identifier; the prepaid device, after receiving the freezing request, judging whether a balance of the user is enough to freeze a corresponding money amount, if not, returning to the value-added service authentication charging center a freezing failure message, which carries the user identifier and the balance of the user; and
after receiving the freezing failure message, the value-added service authentication charging center inversely calculating a traffic quota available to the user according to the balance of the user and returning to the value-added service engine a traffic start response message, which carries the user identifier and the traffic quota available to the user; the value-added service engine providing a value-added service for the user after receiving the traffic start response message;
the method further comprising:
the value-added service authentication charging center, after receiving the freezing failure message, prompting the user that the balance is not enough and whether to continuously use the value-added service, and after the user confirms to continue to use, then calculating the traffic quota available to the user according to the balance of the user, and returning to the value-added service engine the traffic start response message.

7. The method according to claim 6, the method further comprising:
when detecting any one of following conditions, the value-added service engine sending to the value-added service authentication charging center a traffic stop request message, which carries the user identifier and information of traffic practically used by the user:
(a) the user ends up using; (b) the user actively stops using; (c) the traffic quota has been used up.

8. The method according to claim 7, the method further comprising:
the value-added service authentication charging center, after receiving the traffic stop request message, billing for the traffic practically used by the user and calculating a fee practically used, and sending to the prepaid device a message for requesting to deduct the fee, which carries the user identifier and the fee practically used by the user; and
the prepaid device, after receiving the message for requesting to deduct the fee, deducting a corresponding fee of the user and returning a deducting success message to the value-added service authentication charging center.

9. The method according to claim 6, the method further comprising:
when a value-added service provider launches a value-added service application carrying traffic information of the value-added service, the value-added service authentication charging center storing the traffic information of the value-added service, or an information synchronizing module, which is located in the value-added service authentication charging center, synchronizing the traffic information of the value-added service to the value-added service engine; and
when the information synchronizing module synchronizes the traffic information of the value-added service to the value-added service engine, the value-added service engine carrying the traffic information of the value-added service when sending the traffic start request message which carries the traffic information of the value-added service to the value-added service authentication charging center.

10. The method according to claim 6, the method further comprising:
the value-added service authentication charging center, after the user confirms to continue to use the value-added service, sending to the prepaid device a request for freezing the balance of the user, which carries the user identifier and the balance; and
the prepaid device, after receiving the request for freezing the balance of the user, freezing the balance of the user.

## Patentansprüche

1. System zum Bereitstellen eines Mehrwertdienstes, das eine Mehrwertdienstauthentifizierungs-Gebührenerhebungszentrale (101), eine Mehrwertdienst-Engine (102) und eine Vorausbezahlvorrichtung (103) umfasst;
wobei die Mehrwertdienst-Engine dafür konfiguriert ist, nach dem Empfangen einer durch ein Nutzer-Endgerät gesendeten Dienstanforderung an die Mehrwertdienstauthentifizierungs-Gebührenerhebungszentrale eine Datenverkehrsstart-Anforderungsnachricht zu senden, die einen Nutzeridentifikator und einen Mehrwertdienstidentifikator transportiert und nach dem Empfangen einer Datenverkehrsstart-Antwortnachricht einen Mehrwertdienst für den Nutzer bereitstellt;
wobei die Mehrwertdienstauthentifizierungs-Gebührenerhebungszentrale dafür konfiguriert ist, nach dem Empfangen der Datendatenverkehrsstart-Anforderungsnachricht, gemäß Datenverkehrsinformationen des Mehrwertdienstes eine Rechnungserstellung auszuführen und einen Geldausgabebetrag zu berechnen, und an die Vorausbezahlvorrichtung eine Einfrierungsanforderung zu senden, die einen einzufrierenden Geldbetrag und den Nutzeridentifikator transportiert; und ein dem Nutzer verfügbares Datenverkehrskontingent gemäß einem Saldo des Nutzers nach dem Empfangen einer Einfrieren-nicht-erfolgreich-Nachricht zu berechnen, und an die Mehrwertdienst-Engine die Datenverkehrsstart-Antwortnachricht zurückzusenden, die den Nutzeridentifikator und das dem Nutzer verfügbare Datenverkehrskontingent transportiert;
wobei die Vorausbezahlvorrichtung dafür konfiguriert ist, nach dem Empfangen der Einfrierungsanforderung zu beurteilen, ob der Saldo des Nutzers ausreicht, um einen entsprechenden Geldbetrag einzufrieren, und wenn nicht, an die Mehrwertdienstauthentifizierungs-Gebührenerhebungszentrale die Einfrieren-nicht-erfolgreich-Nachricht zurückzusenden, die den Nutzeridentifikator und den Saldo des Nutzers transportiert;
wobei die Mehrwertdienstauthentifizierungs-Gebührenerhebungszentrale des Weiteren dafür konfiguriert ist, nach dem Empfangen der Einfrieren-nicht-erfolgreich-Nachricht den Nutzer zu informieren, dass der Saldo nicht ausreicht, und zu fragen, ob der Mehrwertdienst weiterhin genutzt werden soll, und nachdem der Nutzer die weitere Nutzung bestätigt hat, das dem Nutzer verfügbare Datenverkehrskontingent gemäß dem Saldo des Nutzers zu berechnen und die Datenverkehrsstart-Antwortnachricht an die Mehrwertdienst-Engine zurückzusenden.

2. System nach Anspruch 1, wobei
die Mehrwertdienst-Engine des Weiteren dafür konfiguriert, nach dem Detektieren einer der folgenden Bedingungen eine Datenverkehrsstopp-Anforderungsnachricht an die Mehrwertdienstauthentifizierungs-Gebührenerhebungszentrale zu senden, die den Nutzeridentifikator und Informationen über den vom Nutzer praktisch genutzten Datenverkehr transportiert:
(a) der Nutzer beendet schließlich die Nutzung; (b) der Nutzer stoppt aktiv die Nutzung; (c) das Datenverkehrskontingent ist aufgebraucht.

3. System nach Anspruch 2, wobei
die Mehrwertdienstauthentifizierungs-Gebührenerhebungszentrale des Weiteren dafür konfiguriert ist, nach dem Empfangen der Datenverkehrsstopp-Anforderungsnachricht eine für den Datenverkehr zu erstellen, der praktisch von dem Nutzer genutzt wurde, und eine praktisch verwendete Gebühr zu berechnen und an die Vorausbezahlvorrichtung eine Nachricht zu senden, mit der der Abzug der Gebühr angefordert wird und die den Nutzeridentifikator und die von dem Nutzer praktisch genutzte Gebühr transportiert;
die Vorausbezahlvorrichtung des Weiteren dafür konfiguriert ist, nach dem Empfangen der Nachricht, mit der der Abzug der Gebühr angefordert wird, eine entsprechende Gebühr des Nutzers abzuziehen und eine Abzug-erfolgreich-Nachricht an die Mehrwertdienstauthentifizierungs-Gebührenerhebungszentrale zurückzusenden.

4. System nach Anspruch 1, wobei
die Mehrwertdienstauthentifizierungs-Gebührenerhebungszentrale des Weiteren dafür konfiguriert ist, Datenverkehrsinformationen des Mehrwertdienstes zu speichern, wenn ein Mehrwertdienstanbieter eine Mehrwertdienstanwendung startet; oder
die Mehrwertdienstauthentifizierungs-Gebührenerhebungszentrale ein Informationssynchronisierungsmodul umfasst, das dafür konfiguriert ist, wenn der Mehrwertdienstanbieter die Mehrwertdienstanwendung startet, Datenverkehrsinformationen, die der Mehrwertdienst benötigt, mit der Mehrwertdienst-Engine zu synchronisieren; und die Mehrwertdienst-Engine des Weiteren dafür konfiguriert ist, wenn die Datendatenverkehrsstart-Anforderungsnachricht, welche die Datenverkehrsinformationen des Mehrwertdienstes transportiert, gesendet wird, die Datenverkehrsinformationen des Mehrwertdienstes zu der Mehrwertdienstauthentifizierungs-Gebührenerhebungszentrale zu transportieren.

5. System nach Anspruch 1, wobei
die Mehrwertdienstauthentifizierungs-Gebührenerhebungszentrale des Weiteren dafür konfiguriert ist, nachdem der Nutzer die weitere Nutzung des Mehrwertdienstes bestätigt hat, an die Vorausbezahlvorrichtung eine Anforderung zum Einfrieren des Saldos des Nutzers zu senden, die den Nutzeridentifikator und den Saldo transportiert; und
die Vorausbezahlvorrichtung des Weiteren dafür konfiguriert ist, nach dem Empfangen der Anforderung zum Einfrieren des Saldos des Nutzers den Saldo des Nutzers einzufrieren.

6. Verfahren zum Bereitstellen eines Mehrwertdienstes, das umfasst:
dass eine Mehrwertdienst-Engine nach dem Empfangen einer durch ein Nutzer-Endgerät gesendeten Dienstanforderung an eine Mehrwertdienstauthentifizierungs-Gebührenerhebungszentrale eine Datendatenverkehrsstart-Anforderungsnachricht sendet, die einen Nutzeridentifikator und einen Mehrwertdienstidentifikator transportiert; dass die Mehrwertdienstauthentifizierungs-Gebührenerhebungszentrale nach dem Empfangen der Datendatenverkehrsstart-Anforderungsnachricht - gemäß Datenverkehrsinformationen des Mehrwertdienstes - eine Rechnungserstellung ausführt und einen Geldausgabebetrag berechnet und an eine Vorausbezahlvorrichtung eine Einfrierungsanforderung sendet, die einen einzufrierenden Geldbetrag und den Nutzeridentifikator transportiert; und dass die Vorausbezahlvorrichtung nach dem Empfangen der Einfrierungsanforderung beurteilt, ob ein Saldo des Nutzers ausreicht, um einen entsprechenden Geldbetrag einzufrieren, und wenn nicht, an die Mehrwertdienstauthentifizierungs-Gebührenerhebungszentrale eine Einfrieren-nicht-erfolgreich-Nachricht zurücksendet, die den Nutzeridentifikator und den Saldo des Nutzers transportiert; und
dass die Mehrwertdienstauthentifizierungs-Gebührenerhebungszentrale nach dem Empfangen der Einfrierennicht-erfolgreich-Nachricht invers ein dem Nutzer verfügbares Datenverkehrskontingent gemäß dem Saldo des Nutzers berechnet und an die Mehrwertdienst-Engine eine Datenverkehrsstart-Antwortnachricht zurücksendet, die den Nutzeridentifikator und das dem Nutzer verfügbare Datenverkehrskontingent transportiert; und dass die Mehrwertdienst-Engine nach dem Empfangen der Datenverkehrsstart-Antwortnachricht einen Mehrwertdienst für den Nutzer bereitstellt;
wobei das Verfahren des Weiteren umfasst:
dass die Mehrwertdienstauthentifizierungs-Gebührenerhebungszentrale nach dem Empfangen der Einfrierennicht-erfolgreich-Nachricht den Nutzer informiert, dass der Saldo nicht ausreicht, und fragt, ob die Nutzung des Mehrwertdienstes fortgesetzt werden soll, und nachdem der Nutzer die fortgesetzte Nutzung bestätigt hat, das dem Nutzer verfügbare Datenverkehrskontingent gemäß dem Saldo des Nutzers berechnet und an die Mehrwertdienst-Engine die Datenverkehrsstart-Antwortnachricht zurücksendet.

7. Verfahren nach Anspruch 6, wobei das Verfahren des Weiteren umfasst,
dass, wenn eine der folgenden Bedingungen detektiert wird, die Mehrwertdienst-Engine an die Mehrwertdienstauthentifizierungs-Gebührenerhebungszentrale eine Datenverkehrsstopp-Anforderungsnachricht sendet, die den Nutzeridentifikator und Informationen über den vom Nutzer praktisch genutzten Datenverkehr transportiert:
(a) der Nutzer beendet schließlich die Nutzung; (b) der Nutzer stoppt aktiv die Nutzung; (c) das Datenverkehrskontingent ist aufgebraucht.

8. Verfahren nach Anspruch 7, wobei das Verfahren des Weiteren umfasst,
dass die Mehrwertdienstauthentifizierungs-Gebührenerhebungszentrale nach dem Empfangen der Datenverkehrsstopp-Anforderungsnachricht eine Rechnung für den vom Nutzer praktisch genutzten Datenverkehr erstellt und eine praktisch verwendete Gebühr berechnet und an die Vorausbezahlvorrichtung eine Nachricht sendet, die anfordert, die Gebühr abzuziehen, und die den Nutzeridentifikator und die vom Nutzer praktisch genutzte Gebühr transportiert; und
die Vorausbezahlvorrichtung nach dem Empfangen der Nachricht, die den Abzug der Gebühr anfordert, eine entsprechende Gebühr des Nutzers abzieht und eine Abzug-erfolgreich-Nachricht an die Mehrwertdienstauthentifizierungs-Gebührenerhebungszentrale zurücksendet.

9. Verfahren nach Anspruch 6, wobei das Verfahren des Weiteren umfasst,
dass, wenn ein Mehrwertdienstanbieter eine Mehrwertdienstanwendung startet, die Datenverkehrsinformationen des Mehrwertdienstes transportiert, die Mehrwertdienstauthentifizierungs-Gebührenerhebungszentrale die Datenverkehrsinformationen des Mehrwertdienstes speichert oder dass ein Informationssynchronisierungsmodul, das sich in der Mehrwertdienstauthentifizierungs-Gebührenerhebungszentrale befindet, die Datenverkehrsinformationen des Mehrwertdienstes mit der Mehrwertdienst-Engine synchronisiert; und
dass, wenn das Informationssynchronisierungsmodul die Datenverkehrsinformationen des Mehrwertdienstes mit der Mehrwertdienst-Engine synchronisiert, die Mehrwertdienst-Engine, wenn die Datendatenverkehrsstart-Anforderungsnachricht, welche die Datenverkehrsinformationen des Mehrwertdienstes transportiert, gesendet wird, die Datenverkehrsinformationen des Mehrwertdienstes zu der Mehrwertdienstauthentifizierungs-Gebührenerhebungszentrale transportiert.

10. Verfahren nach Anspruch 6, wobei das Verfahren des Weiteren umfasst,
dass die Mehrwertdienstauthentifizierungs-Gebührenerhebungszentrale, nachdem der Nutzer die fortgesetzte Nutzung des Mehrwertdienstes bestätigt hat, an die Vorausbezahlvorrichtung eine Anforderung zum Einfrieren des Saldos des Nutzers sendet, die den Nutzeridentifikator und den Saldo transportiert; und
dass die Vorausbezahlvorrichtung nach dem Empfangen der Anforderung zum Einfrieren des Saldos des Nutzers den Saldo des Nutzers einfriert.

## Revendications

1. Système de fourniture de service à valeur ajoutée comprenant : un centre de facturation d'authentification de service à valeur ajoutée (101), un moteur de service à valeur ajoutée (102) et un dispositif prépayé (103) ;
le moteur de service à valeur ajoutée est configuré pour effectuer, après la réception d'une demande de service envoyée par un terminal d'utilisateur, l'envoi, au centre de facturation d'authentification de service à valeur ajoutée, d'un message de demande de début de trafic, qui porte un identifiant d'utilisateur et un identifiant de service à valeur ajoutée et la fourniture d'un service à valeur ajoutée pour l'utilisateur après la réception d'un message de réponse de début de trafic ;
le centre de facturation d'authentification de service à valeur ajoutée est configuré pour effectuer, après la réception du message de demande de début de trafic, l'établissement d'une facture et le calcul d'une somme d'argent utilisée en fonction d'informations de trafic du service à valeur ajoutée, et l'envoi, au dispositif prépayé, d'une demande de blocage qui porte une somme d'argent à bloquer et l'identifiant d'utilisateur ; et le calcul d'un quota de trafic disponible pour l'utilisateur en fonction d'un solde de l'utilisateur après la réception d'un message d'échec de blocage, et le retour, au moteur de service à valeur ajoutée, du message de réponse de début de trafic, qui porte l'identifiant d'utilisateur et le quota de trafic disponible pour l'utilisateur ;
le dispositif prépayé est configuré pour effectuer, après la réception de la demande de blocage, le jugement si le solde de l'utilisateur est suffisant pour bloquer une somme d'argent correspondante et, si tel n'est pas le cas, le retour au centre de facturation d'authentification de service à valeur ajoutée, du message d'échec de blocage, qui porte l'identifiant d'utilisateur et le solde de l'utilisateur ;
dans lequel le centre de facturation d'authentification de service à valeur ajoutée est en outre configuré pour effectuer, après la réception du message d'échec de blocage, la notification à l'utilisateur que le solde n'est pas suffisant et la demande à l'utilisateur s'il souhaite poursuivre l'utilisation du service à valeur ajoutée et, après la confirmation par l'utilisateur qu'il souhaite poursuivre l'utilisation, le calcul du quota de trafic disponible pour l'utilisateur en fonction du solde de l'utilisateur et le retour, au moteur de service à valeur ajoutée, du message de réponse de début de trafic.

2. Système selon la revendication 1, dans lequel
le moteur de service à valeur ajoutée est en outre configuré pour effectuer : lors de la détection de l'une des conditions suivantes, l'envoi, au centre de facturation d'authentification de service à valeur ajoutée, d'un message de demande d'arrêt de trafic, qui porte l'identifiant d'utilisateur et des informations de trafic utilisé en pratique par l'utilisateur :
(a) l'utilisateur termine l'utilisation ; (b) l'utilisateur arrête activement l'utilisation ; (c) le quota de trafic a été complètement utilisé.

3. Système selon la revendication 2, dans lequel
le centre de facturation d'authentification de service à valeur ajoutée est en outre configuré pour effectuer, après la réception du message de demande d'arrêt de trafic, l'établissement d'une facture pour le trafic utilisé en pratique par l'utilisateur et le calcul d'un montant à payer pour l'utilisation en pratique, et l'envoi, au dispositif prépayé, d'un message pour demander la déduction du montant à payer, qui porte l'identifiant d'utilisateur et le montant à payer pour l'utilisation en pratique par l'utilisateur ;
le dispositif prépayé est en outre configuré pour effectuer, après la réception du message de demande de déduction du montant à payer, la déduction d'un montant correspondant à payer par l'utilisateur et le retour d'un message de réussite de déduction au centre de facturation d'authentification de service à valeur ajoutée.

4. Système selon la revendication 1, dans lequel
le centre de facturation d'authentification de service à valeur ajoutée est en outre configuré pour effectuer la mémorisation d'informations de trafic du service à valeur ajoutée lorsqu'un fournisseur de service à valeur ajoutée lance une application de service à valeur ajoutée ; ou
le centre de facturation d'authentification de service à valeur ajoutée comprend un module de synchronisation d'informations qui est configuré pour effectuer, lorsque le fournisseur de service à valeur ajoutée lance l'application de service à valeur ajoutée, la synchronisation d'informations de trafic qui sont nécessaires au service à valeur ajoutée avec le moteur de service à valeur ajoutée ; le moteur de service à valeur ajoutée est en outre configuré pour porter les informations de trafic du service à valeur ajoutée lors de l'envoi du message de demande de début de trafic qui porte les informations de trafic du service à valeur ajoutée à destination du centre de facturation d'authentification de service à valeur ajoutée.

5. Système selon la revendication 1, dans lequel
le centre de facturation d'authentification de service à valeur ajoutée est en outre configuré pour effectuer, après la confirmation par l'utilisateur qu'il souhaite poursuivre l'utilisation du service à valeur ajoutée, l'envoi, au dispositif prépayé, d'une demande de blocage du solde de l'utilisateur, qui porte l'identifiant d'utilisateur et le solde ;
le dispositif prépayé est en outre configuré pour effectuer, après la réception de la demande de blocage du solde de l'utilisateur, le blocage du solde de l'utilisateur.

6. Procédé de fourniture de service à valeur ajoutée comprenant :
après la réception d'une demande de service envoyée par un terminal d'utilisateur, l'exécution, par un moteur de service à valeur ajoutée, de l'envoi, à un centre de facturation d'authentification de service à valeur ajoutée, d'un message de demande de début de trafic, qui porte un identifiant d'utilisateur et un identifiant de service à valeur ajoutée ; après la réception du message de demande de début de trafic, l'exécution, par le centre de facturation d'authentification de service à valeur ajoutée, de l'établissement d'une facture et du calcul d'une somme d'argent utilisée en fonction d'informations de trafic du service à valeur ajoutée, et l'envoi, à un dispositif prépayé, d'une demande de blocage, qui porte une somme d'argent à bloquer et l'identifiant d'utilisateur ; après la réception de la demande de blocage, l'exécution, par le dispositif prépayé, du jugement si un solde de l'utilisateur est suffisant pour bloquer une somme d'argent correspondante et, si tel n'est pas le cas, le retour, au centre de facturation d'authentification de service à valeur ajoutée, d'un message d'échec de blocage, qui porte l'identifiant d'utilisateur et le solde de l'utilisateur ; et
après la réception du message d'échec de blocage, l'exécution, par le centre de facturation d'authentification de service à valeur ajoutée, du calcul inverse d'un quota de trafic disponible pour l'utilisateur en fonction du solde de l'utilisateur et du retour, au moteur de service à valeur ajoutée, d'un message de réponse de début de trafic, qui porte l'identifiant d'utilisateur et le quota de trafic disponible pour l'utilisateur ; l'exécution, par le moteur de service à valeur ajoutée, de la fourniture d'un service à valeur ajoutée pour l'utilisateur après la réception du message de réponse de début de trafic ;
le procédé comprenant en outre :
après la réception du message d'échec de blocage, l'exécution, par le centre de facturation d'authentification de service à valeur ajoutée, de la notification à l'utilisateur que le solde n'est pas suffisant et la demande à l'utilisateur s'il souhaite poursuivre l'utilisation du service à valeur ajoutée et, après la confirmation par l'utilisateur qu'il souhaite poursuivre l'utilisation, le calcul du quota de trafic disponible pour l'utilisateur en fonction du solde de l'utilisateur et le retour, au moteur de service à valeur ajoutée, du message de réponse de début de trafic.

7. Procédé selon la revendication 6, comprenant en outre :
lors de la détection de l'une des conditions suivantes, l'exécution, par le moteur de service à valeur ajoutée, de l'envoi, au centre de facturation d'authentification de service à valeur ajoutée, d'un message de demande d'arrêt de trafic, qui porte l'identifiant d'utilisateur et des informations de trafic utilisé en pratique par l'utilisateur :
(a) l'utilisateur termine l'utilisation ; (b) l'utilisateur arrête activement l'utilisation ; (c) le quota de trafic a été complètement utilisé.

8. Procédé selon la revendication 7, comprenant en outre :
après la réception du message de demande d'arrêt de trafic, l'exécution, par le centre de facturation d'authentification de service à valeur ajoutée, de l'établissement d'une facture pour le trafic utilisé en pratique par l'utilisateur et le calcul d'un montant à payer pour l'utilisation en pratique, et l'envoi, au dispositif prépayé, d'un message pour demander la déduction du montant à payer, qui porte l'identifiant d'utilisateur et le montant à payer pour l'utilisation en pratique par l'utilisateur ; et
après la réception du message de demande de déduction du montant à payer, l'exécution, par le dispositif prépayé, de la déduction d'un montant correspondant à payer par l'utilisateur et le retour d'un message de réussite de déduction au centre de facturation d'authentification de service à valeur ajoutée.

9. Procédé selon la revendication 6, comprenant en outre :
lorsqu'un fournisseur de service à valeur ajoutée lance une application de service à valeur ajoutée portant des informations de trafic du service à valeur ajoutée, l'exécution, par le centre de facturation d'authentification de service à valeur ajoutée, de la mémorisation des informations de trafic du service à valeur ajoutée ; ou l'exécution, par un module de synchronisation d'informations qui est situé dans le centre de facturation d'authentification de service à valeur ajoutée, de la synchronisation des informations de trafic du service à valeur ajoutée avec le moteur de service à valeur ajoutée ; et
lorsque le module de synchronisation d'informations synchronise les informations de trafic du service à valeur ajoutée avec le moteur de service à valeur ajoutée, le moteur de service à valeur ajoutée porte les informations de trafic du service à valeur ajoutée lors de l'envoi du message de demande de début de trafic qui porte les informations de trafic du service à valeur ajoutée à destination du centre de facturation d'authentification de service à valeur ajoutée.

10. Procédé selon la revendication 6, le procédé comprenant en outre :
après la confirmation par l'utilisateur qu'il souhaite poursuivre l'utilisation du service à valeur ajoutée, l'exécution, par le centre de facturation d'authentification de service à valeur ajoutée, de l'envoi, au dispositif prépayé, d'une demande de blocage du solde de l'utilisateur, qui porte l'identifiant d'utilisateur et le solde ; et
après la réception de la demande de blocage du solde de l'utilisateur, l'exécution, par le dispositif prépayé, du blocage du solde de l'utilisateur.
